# EUROPÄISCHE PATENTSCHRIFT

(11) **EP 0 731 818 B1**
(45) Veröffentlichungstag und Bekanntmachung des Hinweises auf die Patenterteilung: **30.07.1997**
(21) Anmeldenummer: 95901427.5
(22) Anmeldetag: 24.11.1994
(51) Int. Cl.: C08G 18/66, C08G 18/36, C08G 18/48, C08G 18/28, C08J 9/00

(54) **MIT NICHTIONISCHEN TENSIDEN MODIFIZIERTE POLYURETHANSCHÄUME**
POLYURETHANE FOAMS MODIFIED BY NON-IONIC TENSIDES
MOUSSES DE POLYURETHANE MODIFIEES A L'AIDE DE TENSIOACTIFS NON IONIQUES

(30) Priorität: 03.12.1993 DE 4341264
(43) Veröffentlichungstag der Anmeldung: 18.09.1996
(73) Patentinhaber: Henkel Kommanditgesellschaft auf Aktien, 40191 Düsseldorf (DE)
(72) Erfinder: DAUTE, Peter, D-27616 Beverstedt (DE); GRÜTZMACHER, Roland, D-42489 Wülfrath (DE); KLEIN, Johann, D-40233 Düsseldorf (DE); KLUTH, Hermann, D-40595 Düsseldorf (DE); HÖFER, Rainer, D-40477 Düsseldorf (DE)
(86) Internationale Anmeldenummer: EP9403890
(87) Internationale Veröffentlichungsnummer: WO9515349

(56) Entgegenhaltungen:
- EP-A- 0 125 579
- EP-A- 0 256 355
- FR-A- 2 086 977
- GB-A- 892 776
- US-A- 3 463 745

## Beschreibung

Die Erfindung betrifft neue, mit hydrophilen Tensiden, die mit Isocyanaten reaktive funktionelle Gruppen enthalten, modifizierte Polyurethanmassen zur Herstellung von feinzelligen, homogenen Polyurethanschäumen.

Polyurethanschäume, insbesondere sogenannte Einkomponenten-Polyurethanschäume sind z.B. aus Ullmannns Enzyklopädie der technischen Chemie, 4. Auflage, Band 19, S. 317 ff, Verlag Chemie, Weinheim, bekannt.
Dabei handelt es sich um Mischungen aus mit Isocyanat-Gruppen terminierten Reaktionsprodukten von Polyolen mit di- oder polyfunktionellen Isocyanaten, Katalysatoren zur Beschleunigung der Reaktion, Mitteln zur Senkung der Viskosität, Treibmitteln und sonstigen Hilfsstoffen, die - gegen Feuchtigkeit geschützt - in Druckgefäßen in den Handel gebracht werden. Bei Freisetzen aus den Druckgefäßen kommt es durch Verdunsten des Treibmittels zum Aufschäumen der Masse, die durch einwirkende Feuchtigkeit aus der Umgebung oder der Atmosphäre aushärtet.
Polyurethanschäume werden beispielsweise zur Isolierung von Haushaltsgeräten, in der Bauindustrie als Isoliermaterial und zum Ausschäumen von Zwischenräumen sowie als Dämmstoffe verwendet.

Sie enthalten im wesentlichen Polyole mit mehreren OH-Gruppen im Molekül, di- oder polyfunktionelle Isocyanate, Treibmittel, Flammschutzmittel und Hilfsstoffe wie Katalysatoren und Stabilisatoren.

Als Polyole können die in der Polyurethanchemie üblichen Polyether- oder Polyesterpolyole eingesetzt werden. Einen Überblick über mögliche Polyole gibt Ullmannns Enzyklopädie der technischen Chemie, 4. Auflage, Band 19, S. 304-5, Verlag Chemie, Weinheim.
Die Herstellung und Verwendung preiswerter fettchemischer Polyole aus nachwachsenden Rohstoffen für diesen Zweck ist ebenfalls bekannt, und zwar aus den deutschen Patentanmeldungen DE-A1 36 26 223 und DE-A1 41 28 649. In der ersten Anmeldung werden Prepolymere auf Basis oleochemischer Polyole beansprucht, die durch Ringöffnung von epoxidierten Triglyceriden mit Alkoholen und anschließende partielle Umesterung erhalten werden. Die zweite Anmeldung beschreibt die mit Lithiumsalzen katalysierte Ringöffnung von Epoxiden mit Nucleophilen wie Alkoholen, ggf. verbunden mit einer anschließenden Umesterung der Reaktionsprodukte mit weiteren, nicht epoxidierten Triglyceriden.

Als Treibmittel wurden in der Vergangenheit häufig Fluorchlorkohlenwasserstoffe (FCKW) eingesetzt. Wegen ökologischer Bedenken gegen diese, die Ozonschicht gefährdenden Verbindungen werden in neuerer Zeit zunehmend sogenannte teilhalogenierte Kohlenwasserstoffe, abgekürzt HFCKW, die die Ozonschicht weniger gefährden, z.B. Difluorchlormethan, Difluorchlorethan, Dichlorfluorethan oder Tetrafluorethan, als Treibmittel eingesetzt.
Auch der vollständige Verzicht auf fluorhaltige Treibmittel ist bekannt, stattdesssen werden z.B. Dimethylether, Propan oder iso-Butan verwendet.

Die aus ökologischen Gründen eigentlich erwünschte Verwendung von höher fluorierten- oder FCKW-freien Treibmitteln oder fettchemischer Polyole führt zu einer Hydrophobierung der Polyurethanmassen. Als Folge davon kann das Wasser, das für die Vernetzung und Aushärtung der Polyurethanmassen zu Schäumen unbedingt erforderlich ist, den Schaum nur noch ungenügend durchdringen. Dadurch kommt es zur Bildung von Hohlräumen in Schaum, sogenannten Lunkern, sowie zu unerwünschten Schrumpfungserscheinungen des Schaums nach dem Abbinden. Um dies zu vermeiden, müssen beim Verarbeiten solcher Schäume sowohl der Untergrund als auch der Schaum gut angefeuchtet werden. Besonders beim Auftrag der Polyurethanschäume auf trockene Untergründe treten gehäuft Lunker auf.

Die Bildung von Hohlräumen und der Schrumpf sind technisch unerwünscht und erschweren oder verhindern die Anwendung der ökologisch günstigeren Polyurethanschäume.

Dementsprechend bestand die Aufgabe der Erfindung darin, Polyurethanschäume, insbesondere auf Basis fettchemischer Polyole und/oder frei von FCKW-haltigen Treibmitteln, zur Verfügung zu stellen, die ohne Anfeuchten von Untergrund und/oder Schaummasse feinzellige, homogene, lunkerarme Schäume ergeben.

Eine weitere Aufgabe der Erfindung war, die Wasser- und die Wasserdampfdurchlässigkeit von Polyurethanschäumen zu verbessern.

Weiterhin mußte die Stabilität der in Druckdosen abgefüllten Polyurethanmassen gegen Ausfällungen vor allem bei niedrigen Temperaturen gewährleistet bleiben.

Diese Aufgabe wurde erfindungsgemäß dadurch gelöst, daß die zur Herstellung eingesetzten Polyole teilweise durch hydrophile, mit Isocyanatgruppen reaktive funktionelle Gruppen tragende Tenside ersetzt wurden.

Gegenstand der Erfindung sind daher Polyurethanmassen zur Herstellung von Einkomponenten-Polyurethanschäumen, enthaltend Reaktionsprodukte aus Polyolen mit einem molaren Überschuß von di- oder polyfunktionellen Isocyanaten,
dadurch gekennzeichnet, daß
10 bis 80 Gew.% der Polyole durch nichtionische Tenside, die mindestens eine Hydroxylgruppe enthalten, substituiert sind.

### Nichtionische Tenside

Als Tenside im Sinne der Erfindung sind Verbindungen zu verstehen, die aus einer oder mehrerer hydrophober und einer oder mehrerer nichtionischer hydrophiler Gruppen bestehen.

Bei den hydrophoben Gruppen handelt es sich vorzugsweise um ggf. substituierte Kohlenwasserstoff-Reste. Als beispielhaft für nichtionische hydrophile Gruppen seien Polyethylenoxid- oder Polygycerin-Reste genannt.

Als Tenside eignen sich solche, die neben der hydrophilen Gruppe noch eine mit Isocyanatgruppen reaktive funktionelle Gruppe tragen, wie z.B. Fettalkoholethoxylate, Alkylphenolethoxylate, Fettsäureamidethoxylate, Fettsäureaminethoxylate, alkoxylierte Triglyceride mit OH-Gruppen, Alk(en)yloligoglykoside, Fettsäureglucamide oder Partial-Ester von polymerisiertem Glycerin, also solche Verbindungen, die in das Polyurethan kovalent eingebaut werden können.

Besonders gut eignen sich Tenside, die mehrere dieser funktionellen Gruppen im Molekül aufweisen, wie z.B. ethoxyliertes Ricinusöl mit 20 bis 400 Gew.%, bevorzugt 40 bis 200 Gew.% EO-Gehalt bezogen auf nicht ethoxyliertes Ricinusöl oder mit Alkoholen bzw. Carbonsäuren ringgeöffnetes, epoxidiertes Sojaöl, das im Anschluß an die Ringöffnung mit Alkylenoxiden, vorzugsweise Ethylenoxid bis zu einem Gehalt von 20 bis 400 Gew.%, bevorzugt 40 bis 200 Gew.% Alkylenoxid bezogen auf das nicht alkoxylierte Ausgangsprodukt umgesetzt wurde.

Am besten eignet sich ein Tensid, das, wie in der deutschen Anmeldung DE-A1 39 23 394 beschrieben, aus mit Fettsäure ringgeöffnetem, epoxidiertem Sojaöl, durch mit anschließende Umsetzung mit Ethylenoxid bis zu einem Ethylenoxidgehalt von 20 bis 400 Gew.%, bevorzugt 40 bis 200 Gew.% bezogen auf das nicht ethoxylierte Ausgangsprodukt, hergestellt wird.

Die Hydroxyl-Zahlen der erfindungsgemäßen Tenside liegen im Bereich von 10 bis 200, bevorzugt im Bereich von 30 bis 100.

Die genannten Verbindungen werden in Mengen von 10 bis 80 Gew.%, bevorzugt 20 bis 50 Gew.% bezogen auf das Polyol, zur Substitution eingesetzt.

Ein weiterer Vorteil der zuletzt genannten erfindungsgemäßen Tenside ist, daß sie überraschenderweise trotz des hohen Gehalts an Ethylenoxid bei Raumtemperatur nicht kristallisieren. Entsprechend treten auch bei den aus ihnen hergestellten Reaktionsprodukten mit Diisocyanaten auch bei tiefen Temperaturen keine unerwünschten Ausfällungen auf.

Es folgt eine Beschreibung der übrigen Komponenten der Polyurethanschäume.

### Polyole

Als Polyole werden übliche Polyether oder Polyester eingesetzt, wie sie z.B. in Ullmannns Enzyklopädie der technischen Chemie, 4. Auflage, Band 19, S. 304-5, Verlag Chemie, Weinheim, beschrieben sind. Daneben werden bevorzugt oleochemische Polyole, wie sie durch die Reaktion von epoxidierten Triglyceriden mit Alkoholen und ggf. anschließende Umesterung der Reaktionsprodukte mit sich selber oder zugefügtem weiterem nicht epoxidiertem Triglycerid erhältlich sind, verwendet.
Auch die Verwendung oleochemischer Polyole aus der Umesterung von polyfunktionellen Polyolen wie dem Additionsprodukt von Glycerin mit Ethylenoxid oder polymerisiertem Glycerin mit Triglyceriden, wie z. B. Rüböl, ist möglich.
Auch Ricinusöl kann als oleochemisches Polyol verwendet werden.
Die Polyole haben OH-Zahlen von 50 bis 400, bevorzugt 100 bis 300.

### Isocyanate

Als di- oder polyfunktionelle Isocyanate können die in der Polyurethanchemie üblichen, dem Fachmann bekannten Produkte eingesetzt werden, wie sie z.B. in Ullmannns Enzyklopädie der technischen Chemie, 4. Auflage, Band 19, S. 303-4, Verlag Chemie, Weinheim, beschrieben sind. Bevorzugt werden aromatische di- oder polyfunktionelle Isocyanate eingesetzt, besonders bevorzugt Diphenylmethandiisocyanat und/oder die höherfunktionelle Moleküle enthaltenden technischen Qualitäten diese Diisocyanats.

### Hilfsmittel

Als Treibmittel werden bevorzugt HFCKW's wie Difluorchlormethan, Difluorchlorethan, Dichlorfluorethan oder Tetrafluorethan, oder FCKW-freie Treibmittel wie Dimethylether, Propan oder iso-Butan verwendet. Im Rahmen der Erfindung können, obgleich nicht bevorzugt, jedoch auch FCKW-haltige Treibmittel verwendet werden.

Die Polyurethanschäume können noch weitere Verbindungen, wie Flammschutzmittel, z.B. die aus dem Stand der Technik bekannten Tris-(Chloralkyl-)phosphate oder -arylphosphate enthalten. Die Menge an Flammschutzmittel liegt im Bereich von 8 bis 15 Gew. % bezogen auf die gesamte Mischung.
Als Katalysatoren zur Beschleunigung der Reaktion können z. B. die dem Fachmann bekannten tertiären Amine, z.B. 2,2'-Dimorpholinodiethylether, eingesetzt werden.
Als Stabilisator können Siliconöle, ggf. auch modifizierte Siliconöle verwnedet werden.

### Herstellung und Anwendung

Die Herstellung der erfindungsgemäßen Polyurethanmassen erfolgt dadurch, daß die Polyole mit dem modifizierenden nichtionischen hydrophilen Tensid, dem di-oder polyfunktionellen Isocyanat, dem Treibmittel, dem Flammschutzmittel, dem Katalysator und ggf. dem Stabilisator gemischt und in ein Druckgefäß mit Sprühventil abgefüllt werden.

Nach dem Austreten des unter Druck stehenden Gemisches aus dem Ventil bildet sich in üblicher Weise ein Polyurethanschaum, der z.B. zum Ausschäumen von Fugen, zur Isolierung und dergleichen verwendet werden kann.

Die erfindungsgemäßen Polyurethanmassen können vor allem im Bausektor zur Herstellung feinzelliger, homogener, lunkerfreier oder -armer Polyurethanschäume auf trockenen Untergründen und ohne Anfeuchten der Schäume verwendet werden.

Die in Druckdosen abgefüllten Polyurethanmassen sind gegen Ausfällungen bei Lagerung bei niedrigen Temperaturen stabil.

### Beispiele

Alle Angaben sind, sofern nicht anders vermerkt, in Gewichtsprozent.

Allgemeine Arbeitsvorschrift:

Eine Polyurethanmasse wurde nach folgender Rezeptur hergestellt:

| | |
|---|---|
| 19,7 | GT eines oleochemischen Polyols, hergestellt durch Ringöffnung von epoxidiertem Sojaöl mit Methanol und anschließender partieller Umesterung, OHZ = 180 |
| 34,3 | GT Desmodur^{(R)} VKS, 31 % NCO-Gehalt |
| 24 | GT Trichlorpropylphosphat |
| 19,6 | GT Treibmittel aus C₂H₃ClF₂ + CHClF₂ |
| 1,6 | GT DABCO^{(R)} DC 190 |
| 0,8 | GT Dimorpholinodiethylether |
| 100 | GT Polyurethanmasse |

DABCO DC 190 ist ein Silicontensid der Firma Dow Corning. Desmodur VKS ist ein polymeres Isocyanat der Firma Bayer.

Als nichtionische hydrophile Tenside wurden verwendet:
- Tensid 1:: ethoxyliertes Ricinusöl mit einem Gehalt von 65 Gew.% Ethylenoxid
- Tensid 2:: Mit einem Gemisch aus C₆ bis C₁₂-Fettsäuren ring-geöffnetes, epoxidiertes Sojaöl, das anschließend mit Ethylenoxid bis zu einem Ethylenoxidgehalt von 150 Gew.% umgesetzt wurde, OH-Zahl = 54,7.

Anwendungstechnische Prüfung:
Das 1-K-Polyurethangemisch wurde aus Druckdosen in 40 mm breite und 400 mm lange Fugen gesprüht. Als Untergrund diente trockener und mit Wassser getränkter Zellstoff. Die Qualität der Schäume wurde nach dem Aushärten beurteilt. Danach wurden die Polyurethanstränge aufgeschnitten, um evtl. Lunker zu erkennen.

| **Feuchter Untergrund:** | | | |
|---|---|---|---|
| Beispiel Nr. | 1 (Vergl.) | 2 | 3 |
| Basispolyol | 100 % | 70 % | 70 % |
| | | | |
| Tensid 1 | - | 30 % | - |
| | | | |
| Tensid 2 | - | - | 30 % |
| | | | |
| Schaumvolumen | gut | gut | sehr gut |
| | | | |
| Schaumstruktur | inhomogen | teilweise inhomogen | homogen |
| | | | |
| Lunkerbildung | gering | gering | sehr gering |
| | | | |
| Dimensions- stabilität (Schrumpf) | 6 Vol% | 3 Vol% | 1 Vol% |

| **Trockener Untergrund:** | | | |
|---|---|---|---|
| Beispiel Nr. | 4(Vergl.) | 5 | 6 |
| Basispolyol | 100 % | 70 % | 70 % |
| | | | |
| Tensid 1 | - | 30 % | - |
| | | | |
| Tensid 2 | - | - | 30 % |
| | | | |
| Schaumvolumen | schlecht | gut | sehr gut |
| | | | |
| Schaumstruktur | sehr inhomogen | teilweise inhomogen | homogen |
| | | | |
| Lunkerbildung | häufig | gering | sehr gering |
| | | | |
| Dimensions- stabilität (Schrumpf) | 10 Vol% | 3 Vol% | 1 Vol% |

## Patentansprüche

1. Polyurethanmassen zur Herstellung von Einkomponenten-Polyurethanschäumen, enthaltend Reaktionsprodukte aus Polyolen mit einem molaren Überschuß von di- oder polyfunktionellen Isocyanaten, dadurch gekennzeichnet, daß 10 bis 80 Gew.% der Polyole durch nichtionische Tenside, die mindestens eine Hydroxylgruppe enthalten, substituiert sind.

2. Polyurethanmassen nach Anspruch 1, dadurch gekennzeichnet, daß als Polyole oleochemische Polyole verwendet werden, die durch Ringöffnung von epoxydierten Triglyceriden mit Alkoholen und gegebenenfalls anschließender Umesterung erhalten werden.

3. Polyurethanmassen nach den Ansprüchen 1 und 2, dadurch gekennzeichnet, daß sie aromatische di- oder polyfunktionelle Isocyanate enthalten.

4. Polyurethanmassen nach den Ansprüchen 1 bis 3, dadurch gekennzeichnet, daß als nichtionisches Tensid das Reaktionsprodukt der Ringöffnung eines epoxidierten Triglycerids mit Fettsäuren, umgesetzt mit Ethylenoxid bis zu einem Gehalt von 40 bis 400 Gew.%, bevorzugt 100 bis 200 Gew.% bezogen auf das nicht alkoxylierte Produkt, eingesetzt wird.

5. Verwendung der Polyurethanmassen nach den Ansprüchen 1 bis 4 zur Herstellung feinzelliger, homogener Einkomponenten-Polyurethanschäume.

## Claims

1. Polyurethane compositions for the production of one-component polyurethane foams containing reaction products of polyols with a molar excess of difunctional or polyfunctional isocyanates, characterized in that 10 to 80% by weight of the polyols are replaced by nonionic surfactants containing at least one hydroxyl group.

2. Polyurethane compositions as claimed in claim 1, characterized in that oleochemical polyols obtained by ring-opening of epoxidized triglycerides with alcohols and optionally subsequent transesterification are used as the polyols.

3. Polyurethane compositions as claimed in claims 1 and 2, characterized in that they contain aromatic difunctional or polyfunctional isocyanates.

4. Polyurethane compositions as claimed in claims 1 to 3, characterized in that the reaction product of the ring-opening of an epoxidized triglyceride with fatty acids reacted with ethylene oxide up to a content of 40 to 400% by weight and preferably 100 to 200% by weight, based on the non-alkoxylated product, is used as the nonionic surfactant.

5. The use of the polyurethane composition claimed in claims 1 to 4 for the production of fine-cell, homogeneous one-component polyurethane foams.

## Revendications

1. Masses de polyuréthane pour la fabrication de mousses de polyuréthane à un composant, contenant des produits de réaction de polyols avec un excès molaire d'isocyanates di- ou polyfonctionnels, caractérisées en ce que
10 à 80 % en poids des polyols sont substitués par des tensioactifs non ioniques, qui renferment au moins un groupe hydroxyle.

2. Masses de polyuréthane selon la revendication 1, caractérisées en ce que l'on utilise comme polyols, des polyols oléochimiques, qui sont obtenus par ouverture de cycle de triglycérides époxydés avec des alcools, suivie éventuellement de transestérification.

3. Masses de polyuréthane selon les revendications 1 et 2, caractérisées en ce qu'elles renferment des isocyanates di- ou polyfonctionnels aromatiques.

4. Masses de polyuréthane selon les revendications 1 à 3, caractérisées en ce que l'on met en oeuvre comme tensioactif non ionique, le produit réactionnel de l'ouverture de cycle d'un triglycéride époxydé par des acides gras, qui a été mis en réaction avec de l'oxyde d'éthylène jusqu'à une teneur de 40 à 400, de préférence de 100 à 200 % en poids, par rapport au produit non alcoxylé.

5. Utilisation des masses de polyuréthane selon les revendications 1 à 4 pour la fabrication de mousses de polyuréthane à un composant, à fines cellules et homogènes.
